# Europäisches Patentamt

(19) **European Patent Office**

**Office européen des brevets**

(11) Veröffentlichungsnummer: **0 092 034**

**B1**

(12) ## EUROPÄISCHE PATENTSCHRIFT

(45) Veröffentlichungstag der Patentschrift:
20.05.87

(51) Int. Cl.⁴: **G 01 K 3/04**

(21) Anmeldenummer: **83101463.4**

(22) Anmeldetag: **16.02.83**

(54) Indikator für Anzeige einer Zeit/Temperatur-Belastung.

(30) Priorität: **25.03.82 DE 3210907**

(43) Veröffentlichungstag der Anmeldung:
**26.10.83 Patentblatt 83/43**

(45) Bekanntmachung des Hinweises auf die Patenterteilung:
**20.05.87 Patentblatt 87/21**

(84) Benannte Vertragsstaaten:
**AT BE CH FR GB IT LI NL SE**

(56) Entgegenhaltungen:
**GB-A-1 026 950**
**US-A-2 716 065**
**US-A-3 118 774**
**US-A-4 143 617**

(73) Patentinhaber: **List, Paul Heinz, Prof.Dr.rer.nat.,
Auf 'm Gebrande 23, D-3550 Wehrshausen (DE)**
Patentinhaber: **Hartwig, Rüdiger, Dr., Steinweg 22,
D-5190 Stolberg (DE)**

(72) Erfinder: **List, Paul Heinz, Prof.Dr.rer.nat., Auf 'm
Gebrande 23, D-3550 Wehrshausen (DE)**
Erfinder: **Hartwig, Rüdiger, Dr., Steinweg 22,
D-5190 Stolberg (DE)**

(74) Vertreter: **LOUIS, PÖHLAU, LOHRENTZ &
SEGETH, Kesslerplatz 1 P.B. 3055, D-8500
Nürnberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

# 0 092 034

**Beschreibung**

Die Erfindung betrifft einen Indikator, mit dem die Zeit/Temperatur-Belastung eines mit dem Indikator versehenen Gegenstandes auch über einen längeren Zeitraum und/oder bei höheren Temperaturen erfaßbar ist, der einen Fettstoffe und/oder hinsichtlich des Viskositätsverhaltens mit Fetten vergleichbare synthetische Substanzen und diesem zugesetzte Viskositätsregulatoren aufnehmenden Depotkörper, ein vorzugsweise streifenförmig ausgebildetes Fließmedium, sowie eine diese umschließende, für die Fettstoffe bzw. die synthetischen Substanzen undurchdringbare Hülle aufweist, wobei durch den Anschluß des Fließmediums an den Depotkörper die Fettstoffe bzw. die synthetischen Substanzen über die Zeit fortschreitend in das Fließmedium eindringen.

Da sich die Viskosität der in dem Depotkörper befindlichen Fettstoffe mit der auf den zu überwachenden Gegenstand einwirkenden Temperatur und damit auch die Geschwindigkeit, mit der die Fettstoffe in das Fließmedium eindringen, ändert, läßt sich somit aufgrund der Strecke, über welche das Fließmittel während der Lagerung des betreffenden Gegenstandes in das Fließmedium eindringt, die Zeit/ Temperatur-Belastung eines Gegenstandes erfassen. Durch den Zusatz von Viskositätsregulatoren kann der Viskositäts/ Temperatur-Gradient des aus den Fettstoffen gebildeten Fließmittels entsprechend den jeweiligen Bedürfnissen des Einzelfalles eingestellt werden.

Bei einer Vielzahl von Produkten, z.B. Arzneimitteln und Kosmetika, liegen die Temperaturen, von denen ab mit einer Beeinträchtigung des Produkts zu rechnen ist, oberhalb von 0° C, vielfach erst jenseits 20° C. Da solche Produkte bis zum Verbrauch oft über längere Zeiträume (Monate und Jahre) gelagert werden, müssen die zur Kontrolle der Zeit/Temperatur-Belastung verwendeten Indikatoren eine entsprechende (Anzeige) Kapazität aufweisen. Zu diesem Zweck hat man den das Fließmittel aufnehmenden Docht entsprechend lang ausgebildet. Zur Erzielung möglichst raumsparender Wegverlängerungen wurde der Docht vielfach in Windungen gelegt. Einer Vergrößerung der Dochtlänge sind jedoch vom Platzbedarf für die Anbringung des Indikators und auch vom Kostenaufwand her Grenzen gesetzt.

Aus der US-A- 31 18 774 ist ein Indikator der eingangs erwähnten Ausführung mit einer vergleichsweise großen Anzeigekapazität bekannt. Diese wird im Prinzip dadurch erreicht, daß die als Fließmittel verwendeten Kohlenwasserstofföle und -wachse bzw. die Mischung aus diesen hinsichtlich ihres Schmelzbereichs so eingestellt sind, daß die Immigration des Fließmittels beim Unterschreiten einer bestimmten Temperatur, die für die Haltbarkeit bzw. Qualität des zu überwachenden Gegenstandes als kritisch angesehen wird, zum Stillstand kommt. Dadurch wird die Erfassung des Integrals der Zeit/ Temperatur-Belastung ungenau. Da es aber in vielen Fällen keine genau definierte Temperatur gibt, bei deren Überschreitung erst mit einer Beeinträchtigung der betreffenden Ware zu rechnen ist, erscheint eine zuverlässige Feststellung dieses Integrals von praktischer Bedeutung.

Die Erfindung hat sich deshalb, ausgehend von dem als bekannt vorausgesetzten Indikator, die Aufgabe gestellt, einen mit Fettstoffen als Fließmittel arbeitenden Indikator so weiterzuentwickeln, daß es möglich ist, die Zeit/Temperatur-Belastung auch in solchen Fällen zuverlässig zu erfassen, in denen die Kontrolle über verhältnismäßig lange Zeiträume und/oder bei höheren Temperaturen durchgeführt werden muß.

Zur Lösung der Erfindungsaufgabe wird bei einem Indikator der eingangs genannten Art vorgeschlagen, daß den in dem Depotkörper enthaltenen Fettstoffen bzw. synthetischen Substanzen als Viskositätsregulatoren Gelbildner zugesetzt sind. Durch die Zugabe von Gelbildnern zu den in dem Depot enthaltenen Fettstoffen wird erreicht, daß während der Betriebsdauer des Indikators eine Gelstruktur in dem Depot aufrechterhalten wird. Bei einer solchen Struktur handelt es sich um ein disperses System "fest in flüssig", zu dessen Stabilisierung sog. Gelbildner verwendet werden (Manegold, E. "Allgemeine und angewandte Kolloidkunde", Straßenbau, Chemie und Technik, Verlagsgesellschaft m.b.H, Band 1, S. 599 f., Heidelberg, 1965). Die Gelbildner bestehen vorzugsweise aus anorganischen Adsorbentien, wie beispielsweise Aluminiumhydroxid, hochdispersem Siliziumdioxid oder Bentoniten (Bentonit A und B), also Stoffen, die im Anwendungstemperaturbereich nicht schmelzen. Sie werden in einer für die Ausbildung der Gelstruktur adäquaten Menge eingesetzt.

Die erfindungsgemäße Zugabe von Gelbildnern zu den im Depot des erfindungsgemäßen Indikators enthaltenen Fettstoffen führt dazu, daß deren Viskositätsverhalten während der gesamten Benutzungsdauer des Indikators durch die fest/flüssig-Struktur des Depots bestimmt wird, also dem einer Nicht-Newtonschen Flüssigkeit entspricht (vgl. Römpp "Chemie-Lexikon" 7. Auflage unter "Newtonsche Flüssigkeiten").

Hieraus leitet sich der Vorteil einer hinsichtlich der erfaßbaren Zeiträume und Temperaturbereiche größeren Anwendungsbreite des erfindungsgemäßen Indikators im Vergleich zu den bekannten Anzeigeeinrichtungen ab, die mit Newtonschen Flüssigkeiten als Fließmittel oder gelbildnerfreien Fettstoffsystemen arbeiten, die bei Tempersturerhöhung im Laufe der Zeit in eine Newtonsche Flüssigkeit übergehen.

Wenn im Zusammenhang mit der Erfindung von Fettstoffen die Rede ist, dann sind hierunter nicht nur die "echten" Fette, also Glyceride höherer Fettsäuren (Öle, Weichfette, Wachse), sondern generell solche fettartigen Stoffe zu verstehen, die in ihrem Viskositätsverhalten den echten Fetten ähnlich sind ( vgl. Römpp "Chemie-rexikon" 7. Auflage unter "Fette und fette Öle"). Hierzu gehören beispielsweise auch Paraffine sowie synthetische Substanzen wie beispielsweise Polyethylenglykol.

Das Arbeitsprinzip des erfindungsgemäßen Indikators beruht also darauf, daß eine aufgrund von Kapillarwirkung in das Fließmedium eindringende Substanz bzw. Substanzgemisch (Fließmittel) im Laufe der Zeit eine immer größere Wegstrecke in dem Fließmedium zurücklegt, und zwar mit einer Geschwindigkeit, die um so größer oder geringer ist, je niedriger bzw. höher die in jedem Augenblick des Beobachtungszeitraums

2

0 092 034

von der jeweils herrschenden Einwirkungstemperatur abhängige Viskosität des Fließmittels ist. Da bei dem erfindungsgemäßen Indikator die Immigration des Fließmittels in das Fließmedium niemals zum Stillstand kommt, können die beiden sich überlagernden Belastungsfaktoren (Zeit und Temperatur) über die Anzeige der von dem Fließmittel in dem Fließmedium zurückgelegten Wegstrecke als Gesamtbelastung zuverlässig erfaßt werden.

Das Fortschreiten des Niveaus des Fließmittels in dem Fließmedium kann in an sich bekannter Weise optisch erkennbar gemacht werden, z.B. dadurch, daß dem Fließmittel ein visuell wahrnehmbarer Farbstoff zugesetzt ist.

Im Einzelfall kann durch die Abstimmung der Zusammensetzung des Fließmittels, insbesondere durch die Höhe des Gelbildneranteils in der Depotfüllung, sowie durch die Beschaffenheit des Fließmediums den jeweiligen, sich nach dem zu überwachenden Produkt und den zu erwartenden Lagerungsbedingungen richtenden Vorgaben, d.h. dem abzudeckenden Lagerzeitraum und Temperaturbereich, Rechnung getragen werden. Für Langzeitkontrollen wird man Depots mit einem höheren Gehalt an viskositätserhöhenden Gelbildnern verwenden als bei Kurzzeitkontrollen.

Die Viskosität des Fließmittels und damit die Geschwindigkeit, mit der das Fließmittel in das Fließmedium hineinwandert, läßt sich zusätzlich durch den Schmelzbereich der verwendeten Fettstoffe regulieren. Falls Belastungen in einem sich auf höhere Temperaturen beschränkenden Bereich (z.B. 50 bis 80°C) erfaßt werden sollen, werden Stoffe mit einem höheren Schmelzbereich verwendet als für Kontrollen bei niedrigeren Temperaturen. Durch entsprechende Einstellung des Schmelzbereiches können Belastungen bis herab auf mindestens -10°C erfaßt werden.

Der Aufbau des Depotkörpers und dessen Herstellung wird noch anhand von Ausführungsbeispielen im einzelnen erläutert werden. Für die Speicherung der mit den Gelbildnern versetzten Fettstoffe in dem Depotkörper besteht eine Möglichkeit darin, daß das Fließmittel auf einem aus porösem bzw. saugfähigem Material bestehenden Träger auf- bzw. in diesen eingebracht wird. Als ein solches Trägermaterial können beispielsweise Filz oder andere hinsichtlich der Absorptionskapazität für das Fließmittel vergleichbare textile Werkstoffe oder nichttextile Materialien wie beispielsweise poröse Keramikkörper eingesetzt werden.

Um das in dem Depotkörper gespeicherte Fließmittel zunächst, d.h. während der Lagerung des Indikators vor seiner Anbringung an dem zu überwachenden Gegenstand, daran zu hindern, in das Fließmedium einzudringen, kann zwischen dem Depotkörper und dem Fließmedium ein Trennkörper angeordnet sein, der bei Inbetriebnahme des Indikators über eine mit ihm verbundene Handhabe entfernbar ist. Ein solcher Trennkörper kann eine Lasche sein, die bei der Herstellung des Indikators zwischen dem Depotkörper und dem Fließmedium zu liegen kommt und einen durch die Hülle des Indikators nach außen herausgeführten teil aufweist.

Eine vorteilhafte Weiterentwicklung der Erfindung zielt darauf ab, den Indikator so auszubilden, daß neben der Zeit/Temperatur-Belastung auch die von einer Feuchtigkeitseinwirkung ausgehende Belastung erfaßt wird. Zu diesem Zwecke sieht die Erfindung vor, daß die Hülle des Indikators wasserdampfdurchlässig ist und durch die Abgabe und Aufnahme von Feuchtigkeit durch das Fließmittel dessen Viskosität veränderbar ist. Als Beispiel für ein solches Hüllenmaterial sei eine Polyamidfolie mit einer Stärke von 40 μm genannt. In diesem Falle hat das Fließmittel zweckmäßigerweise hydrophilen Charakter. In diesem Zusammenhang hat sich ein Fließmittel auf Polyethylenglykolbasis als geeignet erwiesen. Zweckmäßig sollte die Hülle des Indikators denselben Wasserdampfdurchlässigkeitswert haben wie die Produktverpackung, weil dadurch die Feuchtigkeitseinwirkung auf das Produkt durch den Indikator sehr genau reproduziert würde.

Die Indikatorhülle wird im allgemeinen durch zwei Folienlagen gebildet, die zwischen sich den Depotkörper und das Fließmedium so einschließen, daß diese in ihrer Lage fixiert sind. Dies wird durch eine entsprechend feste Anlage der Folienlagen aneinander und an dem Depotkörper und dem Fließmedium erreicht. Dadurch wird auch sichergestellt, daß das Fließmittel aus dem Depotkörper nur in das Fließmedium hineinwandern und sich nicht in Leerräume ausbreiten kann.

Das Fließmittel soll natürlich auch nicht in die Hülle eindiffundieren. Wird nun aus Gründen einer guten Verschweißbarkeit für die beiden die Außenabdeckung bildenden Hüllenlagen ein lipophiler Kunststoff wie beispielsweise Polyäthylen verwendet, so sollte der Depotkörper und das Fließmedium zunächst auf beiden Seiten mit einem nicht-lipophilen, wenn auch nicht oder nur schwer verschweißbaren Material, z.B. einer Polyterephthalsäureesterfolie, abgedeckt werden, welche dann die Innenabdeckung bildet. Die Versiegelung des Indikators kann dann entlang der gegenüber der Innenabdeckung seitlich vorstehenden Ränder der Außenabdeckung vorgenommen werden.

Der erfindungsgemäße Indikator kann unter Ausnutzung seiner bereits erwähnten Anwendungsbreite, die sich aufgrund der erfaßbaren Zeiträume und Temperaturbereiche ergibt, überall dort eingesetzt werden, wo die Zeit/Temperatur-Belastung und gegebenenfalls zusätzlich auch die Feuchtigkeitsbelastung eines Produktes dieser in seiner Qualität vermindert. Innerhalb des Pharmakabereiches liegt ein ausgewähltes Anwendungsgebiet bei Seren und Impfstoffen, deren Haltbarkeit in hohem Maße davon abhängt, daß die Produkte trotz Wechsel des Lagerortes dauernd kühl aufbewahrt werden. Vermittels des erfindungsgemäßen Indikators läßt sich die Unterbrechung einer solchen Kühlkette kenntlich machen.

Da durch den erfindungsgemäßen Indikator die von der Zeit und der (veränderlichen) Temperatur abhängige Gesamtbelastung erfaßt und durch die Eindringtiefe kenntlich gemacht wird, kann das erfindungsgemäße Indikatorsystem auch zur Messung des Wärmeenergieverbrauchs an Heizkörpern eingesetzt werden.

In der Zeichnung sind einige Ausführungsbeispiele des erfindungsgemässen Indikators veranschaulicht. Es

3

zeigen:

Figur 1 in der Draufsicht eine Ausführung, bei der die Hülle zur Gänze aus durchsichtigem Folienmaterial gebildet ist;

Figur 2 einen Längsschnitt durch die Darstellung der Figur 1;

Figur 3 in der Draufsicht eine Ausführung, bei der die Hülle nur bereichsweise durchsichtig ist;

Figur 4 einen Längsschnitt durch die Darstellung der Figur 3 und

Figur 5 einen Längsschnitt durch einen Indikator mit einem zwischen dem Depotkörper und dem Fliessmedium vorgesehenen Trennkörper, wobei der Einfachheit halber das die Funktionsteile des Indikators abdeckende Fenster nicht mehr gezeigt wurde.

Einander in ihrer Funktion entsprechende Teile sind in den vorgenannten Darstellungen mit denselben Bezugszeichen versehen.

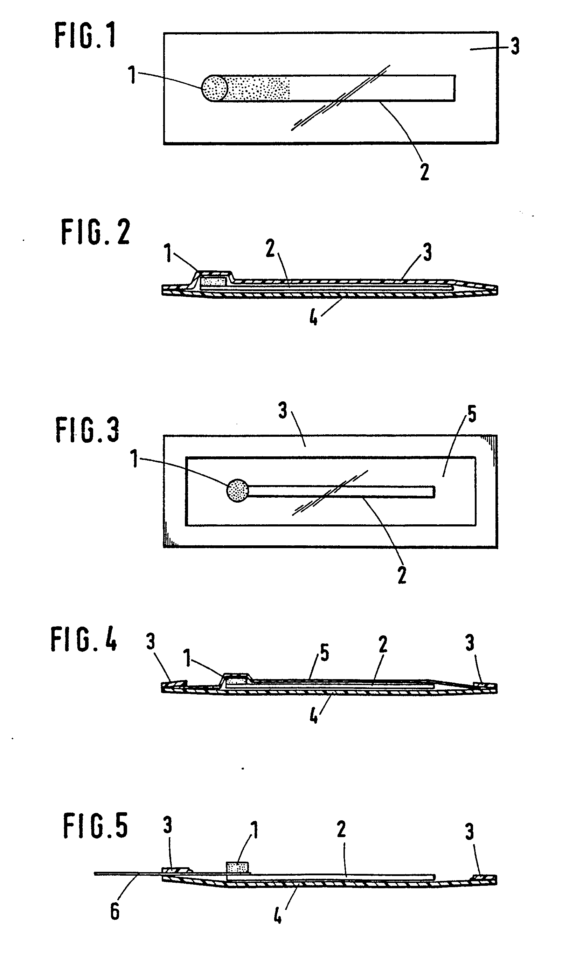

Der erfindungsgemässe Indikator wird durch den Depotkörper 1 und das an diesen angeschlossene (Figuren 1 - 4) bzw. anschliessbare (Figur 5) streifenförmige Fliessmedium 2 gebildet. Diese Teile befinden sich in einer Hülle, die aus einer oberen und unteren Abdecklage 3 bzw. 4 zusammengesetzt ist. Die beiden Abdecklagen können in den Bereichen, in denen sie aneinander anliegen durch Verschweissen oder Verkleben miteinander in solcher Weise verbunden sein, dass die von ihnen umschlossenen Teile 1 und 2 unverrückbar in der Hülle festgelegt sind. Dabei werden diese Teile so dicht von der Hülle umschlossen, dass sich keine Leerräume im Inneren des Indikators ergeben, in die wesentiche Teile des in den Depotkörper gespeicherten Fliessmittels austreten könnten.

Für eine Verklebung der Abdecklagen können diese auf ihrer einen (innen liegenden) Seite mit einer Klebeschicht versehen sein. In einem solchen Falle können die Abdecklagen auch aus einem nichtverschweissbaren Material bestehen, so z.B. aus Papierstreifen, die aussenseitig eine dünne Metallbeschichtung aufweisen. Wegen der Undurchsichtigkeit eines solchen Hüllenmaterials ist, wie aus den Figuren 3 - 5 erkennbar, ein Fenster 5 aus einer Klarsichtfolie, z.B. aus Polyterephthalsäureester vorzusehen, die durch Verklebung mit der oberen Abdecklage verbunden sein kann. Für die Anbringung des Fensters weist die obere Abdecklage 3 eine Aussparung auf.

Während bei den beiden vorstehend beschriebenen Ausführungsbeispielen der Depotkörper 1 und das Fliessmedium 2 von Anfang an in einer leitenden Verbindung miteinander stehen, befindet sich bei dem Indikator nach Figur 5 zwischen diesen beiden Funktionsteilen eine Sperre. Sie besteht aus einem verhältnismässig schmalen Folienstreifen 6, der zwischen den beiden Abdecklagen 3, 4 nach aussen geführt ist und dabei eine Handhabe bildet. In den Bereich, wo der Folienstreifen aus den Innenraum des Indikators nach aussen geführt wird, ist die Verbindung zwischen den beiden Abdecklagen unterbrochen, so dass durch Betätigung der Handhabe der Folienstreifen zwischen dem Depotkörper und dem Fliessmedium fortgezogen und folglich eine leitende Verbindung zwischen diesen beiden Teilen hergestellt werden kann. Ungeachtet der zu diesem Zwecke verschiebbaren Anordnung des Folienstreifens soll dieser von den Abdecklagen so fest umschlossen sein, dass möglichst kein Leerraum innerhalb des Indikators entsteht und keine Luft in das Indikatorinnere eindringen kann. Dies lässt sich dadurch einfach erreichen, dass die Oberfläche des Folienstreifens so beschaffen ist, dass sie sich nicht mit den Abdecklagen verkleben bzw. verschweissen lässt. Es brauchen dann bei der Herstellung des Indikators keine besonderen Massnahmen mehr für die Offenhaltung der Hüllenwandung im Bereich der Hindurchführung des Folienstreifens getroffen zu werden.

Bei der Herstellung des Indikator-Depotkörpers kann wie folgt vorgegangen werden.

Auf eine grössere Unterlage (mehrere m²) aus saugfähigem Material, beispielsweise Filz, wird das Fliessmittel durch Aufgiessen gleichmässig aufgebracht. Hierfür wird es im allgemeinen zweckmässig sein, das Fliessmittel vorher zu erwärmen, um seine Fliessfähigkeit zu erhöhen. Nach dem Erkalten bzw. der Verfestigung des von der Unterlage aufgenommenen Fliessmittels werden aus der imprägnierten Unterlage kleine, der Grösse des Depotkörpers entsprechende Blättchen (z.B. mit 3 mm Kantenlänge) herausgeschnitten bzw. herausgestanzt.

Die Zusammensetzung des für die Herstellung des Depotkörpers verwendeten Fliessmittels ist massgeblich von der Temperatur (Starttemperatur) abhängig, von der ab der Indikator seine Funktion erfüllen soll. Spätestens bei Erreichen der Starttemperatur muss das in dem Depotkörper gespeicherte Fliessmittel so liquid sein, dass die Immigration in das Fliessmittel stattfinden kann. Durch Einstellung des Schmelzbereichs des Fliessmittels auf einen Temperaturbereich, der deutlich unterhalb der Starttemperatur liegt, lässt sich erreichen, dass trotz des von Anbeginn vorhandenen Anschlusses des Fliessmediums an den Depotkörper der Indikator noch nicht in Funktion tritt.

Er kann deshalb vor seiner Anbringung an dem Gegenstand, dessen Zeit/Temperatur-Belastung überwacht werden soll, in speziell hierfür eingerichteten Fertigungsstätten hergestellt und bis zum Abruf auf Lager gehalten werden, ohne dass der Einbau einer besonderen Sperre zwischen Depotkörper und Fliessmittel erforderlich wäre.

Der erfindungsgemässe Indikator kann unter Ausnutzung seiner bereits erwähnten Anwendungsbreite, die sich aufgrund der erfassbaren Zeiträume und Temperaturbereiche ergibt, überall dort eingesetzt werden, wo die Zeit/Temperatur-Belastung und gegebenenfalls zusätzlich auch die Feuchtigkeitsbelastung eines Produktes dieses in seiner Qualität vermindert. Innerhalb des Pharmakabereichs liegt ein ausgehähltes Anwendungsgebiet bei Seren und Impfstoffen, deren Haltbarkeit in hohem Masse davon abhängt, dass die Produkte trotz Wechsels des Lagerortes dauernd gekühlt werden. Vermittels des erfindungsgemässen Indikators lässt sich die Unterbrechung einer solchen Kühlkette kenntlich machen.

4

Der erfindungsgemässe Indikator kann durch Verschweissen oder Verkleben oder auf andere zweckentsprechende Weise mit dem Gegenstand, dessen Zeit/Temperatur-Belastung unter Kontrolle gehalten werden soll, verbunden werden. Es kann sich hierbei beispielsweise um eine Verbraucherverpackung oder um Grossbehälter handeln, in denen kleinere Verpackungseinheiten aufbewahrt werden.

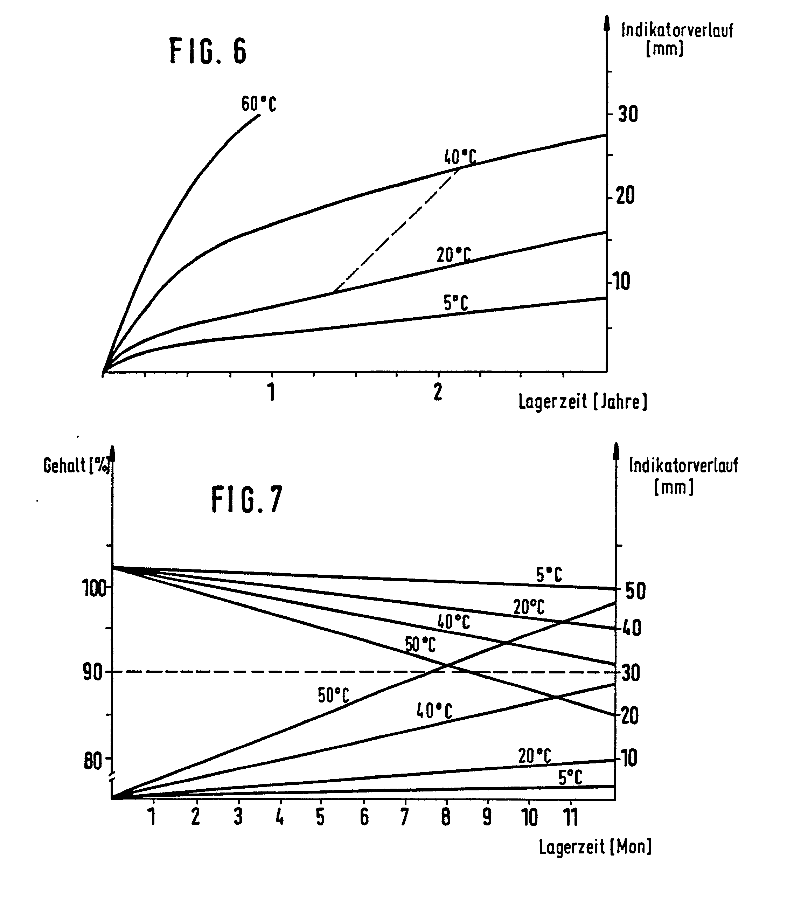

Die Wirkungsweise des vorgeschlagenen Indikatorsystems soll nochmals durch die in den Figuren 6 und 7 wiedergegebenen Diagramme veranschaulicht werden.

Aus der Figur 6 ist die Eindringtiefe (Indikatorverlauf i. mm) des Fliessmittels in das Fliessmedium in Abhangigkeit von einer sich über einige Jahre erstreckenden Lagerzeit für 4 verschiedene Temperaturen ersichtlich. Es ist erkennbar, dass die den einzelnen Temperaturen zugeordneten Kennlinien nach einer Anfangsphase linear verlaufen. Diese Beobachtung wurde bei allen untersuchten Systemen gemacht, wobei die Länge der nichtlinearen Anfangsphase von der Art des Fliessmittels und Fliessmediums beeinflusst wird. Sie ist umso kürzer, je zeitsensibler das System eingestellt ist. Aufgrund der linearen Abhängigkeit der Eindringtiefe von der Lagerzeit nach Ablauf der Anfangsphase bietet sich die Möglichkeit einer "Eichung" des Systems durch Extrapolation, was insbesondere für Langzeitbeobachtungen von Vorteil ist.

Der strichlierte Abschnitt zwischen den Kurven für 20°C und 40°C entspricht einem Temperaturanstieg während der Lagerzeit. Eine einer vorgegebenen Gesamtbelastung entsprechende Eindringtiefe wird dadurch in kürzerer Zeit erreicht, als wenn die Belastungstemperatur konstant auf 20°C gehalten wird. Würde unter Zugrundelgung der Kennlinien der Figur 6 die Belastungsvorgabe einer Eindringtiefe von ca. 16 mm entsprechen, dann ergäbe sich bei einer konstanten Lagerungstemperatur von 20°G eine zulässige Lagerzeit von 3 Jahren. Würde sich hingegen die Temperatur von 20°C auf 40°C entsprechend dem strichlierten Kurvenabschnitt ändern, würde die maximal zulässige Zeit/Temperatur-Belastung bereits nach 1 3/4 Jahren erreicht werden.

Das Diagramm gemäss Figur 7 zeigt den Zusammenhang zwischen der Eindringtiefe (Indikatorverlauf i. mm) des Fliessmittels und der Abnahme des Wirkstoffgehalts eines Produkts für verschiedene Temperaturen während einer verhältnismässig kurzen Lagerzeit, weshalb das Fliessmedium so eingestellt ist, dass die nicht-lineare Eindringgeschwindigkeit in der Anfangsphase vernachlässigbar kurz ist.

Aufgrund der Vorgabe, dass der Wirkstoffgehalt des Produktes nicht unterhalb 90% absinken und dementsprechend die einer Eindringtiefe von 30mm entsprechende Gesamtbelastung nicht überschritten werden darf (vgl. die strichlierte Linie) kann aus dem Diagramm beispielsweise abgeleitet werden, dass bei einer vorgegebenen Lagerzeit von maximal 1 Jahr die kritische Belastung so lange nicht erreicht wird, wie die Lagertemperatur 40°C nicht überschreitet.

Die mit dem erfindungsgemässen Indikatorsystem auch über längere Zeiträume durchgeführten Versuche haben gezeigt, dass sich die Versuchsergebnisse reproduzieren lassen und die zeitlichen Toleranzen bei maximal 3% liegen.

Mit den nachfolgenden Ausführungsbeispielen soll veranschaulicht werden, wie durch Veränderung einmal der für die Arbeitsweise des Indikators massgeblichen Bestandteile (Depotkörper bzw. Fliessmittel, Fliessmedium) und zum anderen der Belastungsparameter der Indikatorverlauf, also die Einwanderung des Fliessmittels aus dem Depotkörper in das Fliessmedium, beeinflussbar ist. Mit Ausnahme des Beispiels 1 ist der Indikatorverlauf in Abhängigkeit von der Belastungszeit im Diagramm durch Kennlinien dargestellt.

Die überschriften zu den einzelnen Spalten der Tabellen der Beispiele haben die nachfolgend angegebene Bedeutung.

Versuchs-Nr.: Die dem Versuchsprotokoll entnommene Numerierung der zu einer Versuchsreihe gehörenden Versuche, wobei die auf einer Zeile der Tabellen stehende Nummernfolge die Anzahl der Versuche wiedergibt, die zwecks Ermittlung der Reproduzierbarkeit unter Konstanthaltung sämtlicher Parameter durchgeführt wurden;

L.-Temp.: Belastungstemperatur in °C

L.-Dauer: Zeitdauer der Belastung in Monaten

M.W.: Mittelwert des Indikatorverlaufs (= Eindringtiefe des Fliessmittels in das Fliessmedium) in mm

s rel.: die in % ausgedrückte maximale relative Standardabweichung des Indikatorverlaufs vom Mittelwert MW.

**Beispiel 1**

Veränderung der Streifenbreite:

| Versuchs-Nr. | L.-Temp. | L.-Dauer | MW | s.rel. | Streifenbreite |
|---|---|---|---|---|---|
| 436 - 441 | 40 | 2 | 81,2 | 6,3 | 0,5 mm |
| 430 - 435 | 40 | 2 | 60,5 | 5,1 | 1,0 mm |
| 447 - 452 | 40 | 2 | 40,3 | 12,5 | 2,0 mm |

| Fliessmedium: | Briefpapier, glatt, weiss | Fliessmittel: |
|---|---|---|
| Paraffin 68/72 | 35% | |
| Neutralöl+ | 50% | |
| Siliciumdioxid | 10% | |
| Azofarbstoff | 5% | |

+ Triglyceride von mittelkettigen ($C_8$ bis $C_{12}$)
Fettsäuren DAB 8

**Beispiel 2**

Veränderung der Belastungstemerpatur

| Versuchs-Nr. | L.-Temp. | L.-Dauer | MW | s rel. |
|---|---|---|---|---|
| 612 - 615 | 20 | 1 | 2,1 | 11,8 |
| 608 - 611 | 30 | 1 | 7,4 | 6,5 |
| 604 - 607 | 40 | 1 | 29,3 | 5,1 |

| Fliessmedium: | Filterpapier, weiss | |
|---|---|---|
| Fliessmittel: | Paraffin 68/72 | 30% |
| | Neutralöl | 55% |
| | Siliciumdioxid | 8% |
| | Azofarbstoff | 7% |

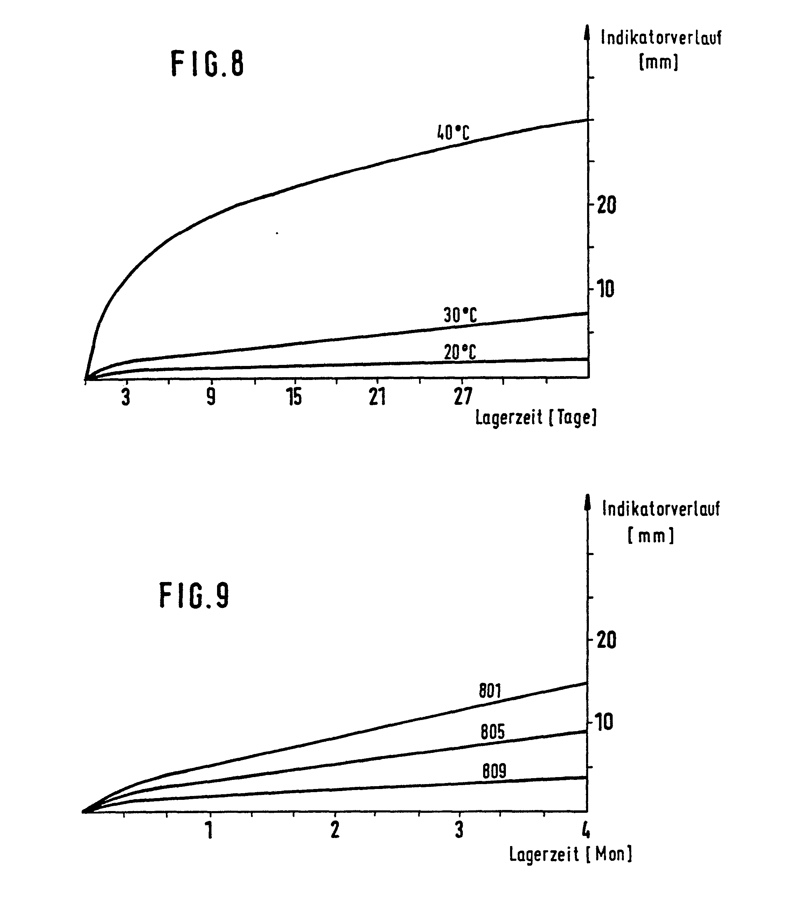

Die Versuchsergebnisse sind in Figur 8 graphisch veranschaulicht.

**Beispiel 3**

Veränderung der Belastungstemperatur

| Versuchs-Nr. | L.-Temp. | L.-Dauer | MW | s rel. |
|---|---|---|---|---|
| 801 - 804 | 40 | 4 | 15 | 2,7 |
| 805 - 808 | 20 | 4 | 7,9 | 3,2 |
| 809 - 812 | 5 | 4 | 3,1 | 8,0 |

| Fliessmedium: | selbsthaftende, abrollbare Kreppfolie ⌀ 0,8 mm | |
|---|---|---|
| Fliessmittel: | Paraffin 68/72 | 60% |
| | Neutralöl | 28% |
| | Siliciumdioxid | 10% |
| | Azofarbstoff | 2% |

Die Versuchsergebnisse sind in Figur 9 graphisch veranschaulicht.

**Beispiel 4**

Veränderung der Gelbildneranteile im Fliessmittel

| Versuchs-Nr. | L.-Temp. | L.-Dauer | MW | s rel. | Siliciumdioxid |
|---|---|---|---|---|---|
| | 40 | 12 | 24,7 | 8,0 | 10% |
| 506 - 511 | 40 | 12 | 13,2 | 9,2 | 12% |
| 512 - 517 | 40 | 12 | 6,3 | 9,6 | 15% |

| | | |
|---|---|---|
| Fliessmedium: | Filterpapier, weiss | |
| Fliessmittel: | Paraffin 68/72 | 60% |
| | Neutralöl | 28% |
| | Siliciumdioxid | 10, 12, 15% |
| | Azofarbstoff | 2% |

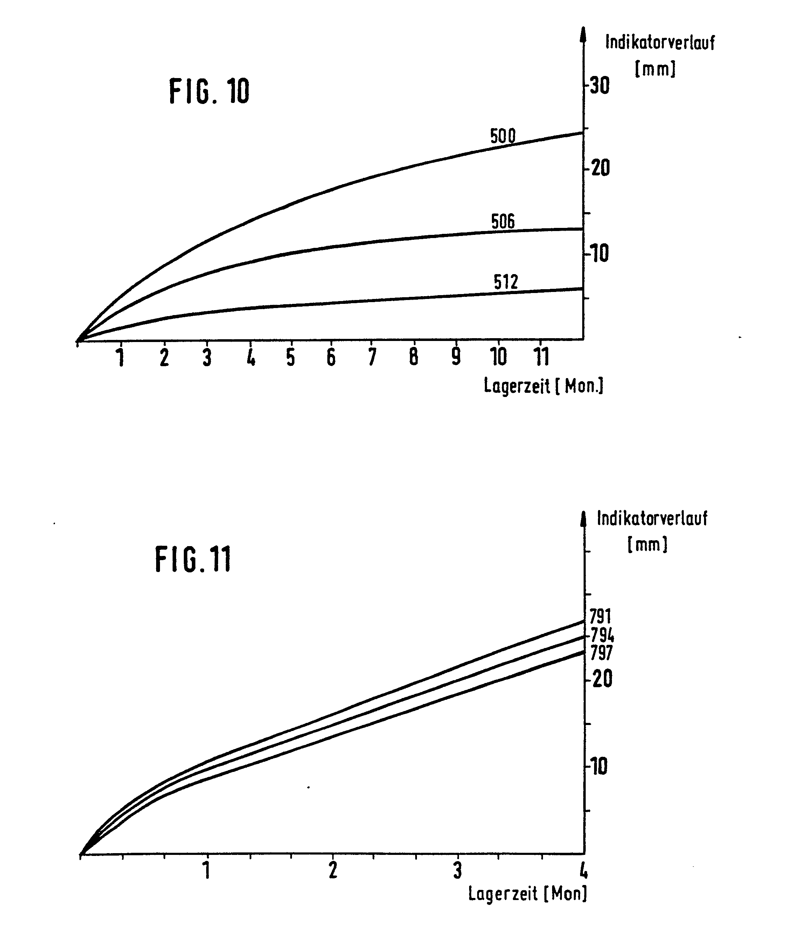

Die Versuchsergebnisse sind in Figur 10 graphisch veranschaulicht.

**Beispiel 5**

Veränderung der Fettstoffanteile im Fliessmittel

| Versuchs-Nr. | L.-Temp. | L.-Dauer | MW | s rel. | Paraffin/Neutralöl |
|---|---|---|---|---|---|
| 791 - 793 | 60 | 4 | 27,3 | 2,1 | 60:28 |
| 794 - 796 | 60 | 4 | 25,3 | 2,3 | 65:23 |
| 797 - 799 | 60 | 4 | 23,7 | 2,4 | 70:18 |

| | | |
|---|---|---|
| Fliessmedium: | selbsthaftende, abrollbare Kreppfolie ⌀ 0,8 mm | |
| Fliessmittel: | Paraffin 68/72 | s. letzte Spalte d. Tabelle |
| | Neutralöl | s. letzte Spalte d. Tabelle |
| | Siliciumdioxid | 10 % |
| | Azo farbstoff | 2 % |

Die Versuchsergebnisse sind in Figur 11 graphisch veranschaulicht.

**Beispiel 6**

Veränderung der Belastungstemperatur

| Versuchs-Nr. | L.-Temp. | L.-Dauer | MW | s rel. |
|---|---|---|---|---|
| 780 - 783 | 60 | 5 | 20,4 | 6,2 |
| 784 - 786 | 40 | 5 | 10,1 | 4,7 |
| 787 - 790 | 20 | 5 | 4,6 | 5,4 |

| | |
|---|---|
| Fliessmedium: | selbsthaftende, abrollbare Kreppfolie |
| Fliessmittel: | wie bei Beispiel 2 |

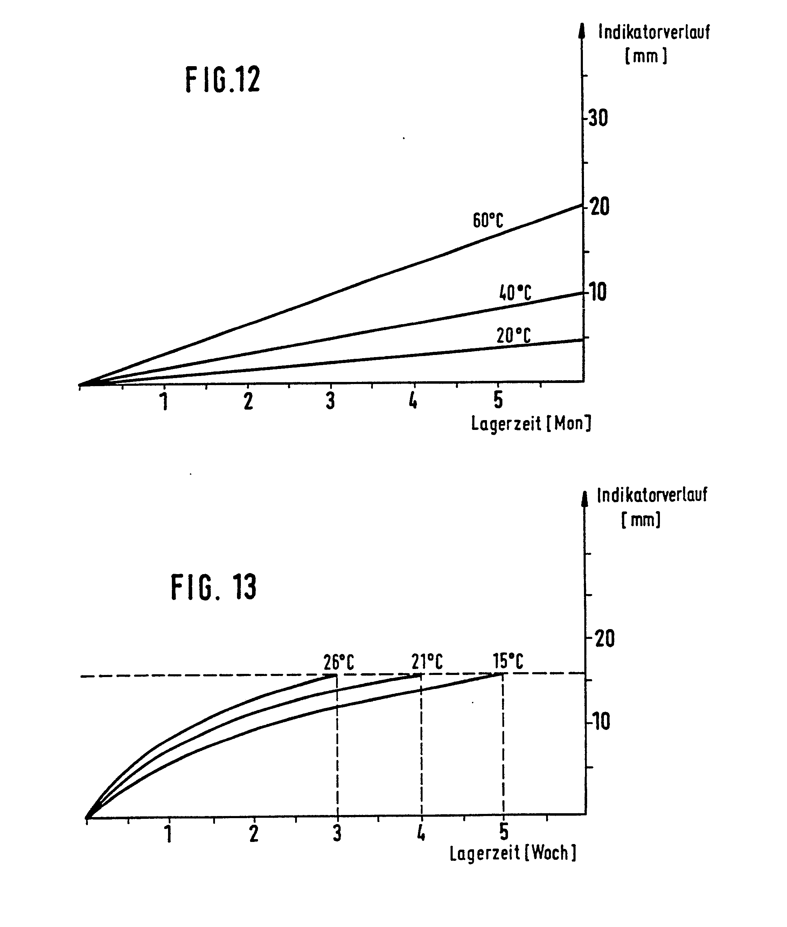

Die Versuchsergebnisse sind in Figur 12 graphisch veranschaulicht.

**Beispiel 7**

Veränderung der Belastungstemperatur

| Versuchs-Nr. | L.-Temp. | L.-Dauer | MW | s rel. |
|---|---|---|---|---|
| 860 - 863 | 15 | 1 | 14,9 | 3,2 |
| 864 - 867 | 21 | 1 | 16,5 | 3,5 |
| 868 - 871 | 26 | 1 | 19,4 | 2,5 |

| Fliessmedium: | Briefpapier, glatt, weiss | |
|---|---|---|
| Fliessmittel: | Paraffin 68/72 | 70% |
| | Paraffin (dickfl.) DAB 8 | 20% |
| | Siliciumdioxid | 6% |
| | Azofarbstoff | 4% |

Der Indikator dieses Ausführungsbeispiels eignet sich in besonderem Masse für die Verfallsanzeige von Augentropfen. Gemäss der graphischen Darstellung in Figur 13 wird der Verfall durch Erreichen einer Eindringtiefe von 16 mm angezeigt.

**Beiepiel 8**

Veränderung der Feuchtigkeitseinwirkung

| Versuchs-Nr. | L.-Temp. | L.-Dauer | MW | s rel. | Wasserdampf |
|---|---|---|---|---|---|
| 577 - 580 | 60 | 2 | 54 | 9 | gesättigt |
| 581 - 583 | 60 | 2 | 36 | 11 | trocken |

| Fliessmedium: | Filterpapier | Fliessmittel, |
|---|---|---|
| hydrophil: | Polyethylenglykol 1000 | 75 % |
| | Polyethylenglykol 600 | 12 % |
| | Siliciumdioxid | 10 % |
| | Methylenblau | 3 % |

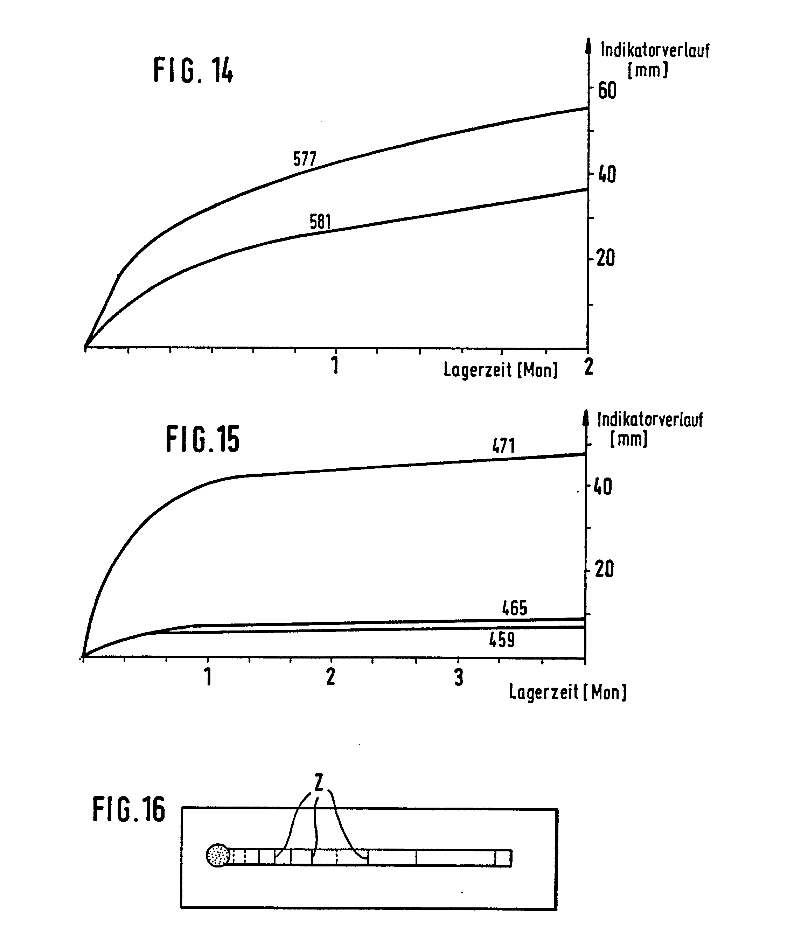

Mit dem Indikator dieses Ausführungsbeispiels kann neben den Belastungsparametern der Zeit und Temperatur auch eine Feuchtigkeitsbelastung erfasst werden (s. Figur 14).

**Beispiel 9**

Veränderung des Fliessmediums (mit und ohne Bremszonen)

Mit diesem Ausführungsbeispiel soll gezeigt werden, wie durch die Ausbildung von sog. Fliessbremsen im Fliessmedium die Charakteristik der Kennlinien verändert werden kann, um bei längeren Beobachtungszeiträumen trotz Verwendung eines vergleichsweise niedrig-viskosen Fliessmittels die Länge des Fliessmediumstreifens zu begrenzen. Die Fliessbremsen werden dadurch erzeugt, dass im Abstand zueinander quer zur Längserstreckung des Btriefens verlaufende, schmale Zonnen ausgebildet werden, in denen die Permeabilität des Streifens für das Fliessmittel gegenüber den zwischen diesen Zonen (in Fig. 16 mit "Z" gekennzeichnet) liegenden Abschnitten herabgesetzt ist.

Für den Abstand dieser Zonen kann eine logarithmische Einteilung gewählt werden, um neben der Bremsung der Einwanderungsgeschwindigkeit des Fliessmittels in das Fliessmedium einen möglichst linearen Indikatorverlauf über die Zeit zu erreichen (vgl.Figur 15). Die Bremszonen können dadurch geschaffen werden, dass der 8treifen in den betreffenden Bereichen mit einem Mittel getränkt wird, das die Hohlräume (Kapillaren) des Fliessmediums teilweise abdichtet. Zu diesem Zwecke können hydrophobierende Harze, z.B. Fluorcarbonharze verwendet werden.

Bei den in der nachfolgenden Tabelle wiedergegebenen Versuchsergebnissen wurden die Versuche der

8

Reihe 471 - 476 mit einem Fliessmedium ohne die vorerwähnten Bremszonen, die beiden anderen Versuchsreihen hingegen mit einem solche Zonen aufweisenden Fliessmedium durchgeführt, wobei in beiden Fällen die Zonen auf dem Streifen in derselben Weise ausgebildet waren.

| Versuchs-Nr. | L.-Temp. | L.-Dauer | MW | s rel. | Streifenbreite |
|---|---|---|---|---|---|
| 459 - 464 | 40 | 4 | 8,1 | 16,8 | 1 mm |
| 465 - 470 | 40 | 4 | 9,8 | 13,2 | 0,5 mm |
| 471 - 476 | 40 | 4 | 39,7 | 16,5 | 1 mm ungebremst |

| Fliessmitteldepot: | Paraffin 68/72 | 40 % |
|---|---|---|
| | Neutralöl | 45 % |
| | Siliciumdioxid | 10 % |
| | Azofarbstoff | 5% |
| Fliessmedium: | Filterpapier, weiss | |

Da durch den erfindungsgemässen Indikator die von der Zeit und der (veränderlichen Temperatur abhängige Gesamtbelastung erfasst und durch die Eindringtiefe kenntlich gemacht wird, kann das erfindungsgemässe Indikatorsystem auch zur Messung des Wärmeenergieverbrauchs an Heizkörpern eingesetzt werden.

## Patentansprüche

1. Indikator, mit dem die Zeit/ Temperatur-Belastung eines mit dem Indikator versehenen Gegenstandes auch über einen längeren Zeitraum und/oder bei höheren Temperaturen erfaßbar ist, der einen Fettstoffe und/oder hinsichtlich des Viskositätsverhaltens mit Fetten vergleichbare synthetische Substanzen und diesem zugesetzte Viskositätsregulatoren aufnehmenden Depotkörper (1), ein vorzugsweise streifenförmig ausgebildetes Fließmedium (2), sowie eine ddiese umschliessende, für die Fettstoffe bzw. die synthetischen Substanzen undurchdringbare Hülle (3, 4) aufweist, wobei durch den Anschluß des Fließmediums (2) an den Depotkörper (1) die Fettstoffe bzw. die synthetischen Substanzen über die Zeit fortschreitend in das Fließmedium (2) eindringen, dadurch gekennzeichnet, daß den in dem Depotkörper (1) enthaltenen Fettstoffen bzw. synthetischen Substanzen als Viskositätsregulatoren Gelbildner zugesetzt sind.

2. Indikator nach Anspruch 1, dadurch gekennzeichnet, daß die Gelbildner anorganische Adsorbentien sind.

3. Indikator nach einem der vorhergehenden Ansprüche, dadurch gekennzeichnet, daß die Gelbildner aus Aluminiumhydroxid, hochdispersem Siliziumdioxid oder Bentoniten bestehen.

4. Indikator nach einem der vorhergehenden Ansprüche, dadurch gekennzeichnet, daß die Fettstoffe bzw. die synthetischen Substanzen zusammen mit, den Gelbildnern auf einen saugfähigen Träger als Fließmedium (2) aufgebracht sind.

5. Indikator nach einem der vorhergehenden Ansprüche, dadurch gekennzeichnet, daß die Fettstoffe aus einem Gemisch von Fettsäureglycerinestern mit Paraffinen bestehen.

6. Indikator nach einem der vorhergehenden Ansprüche mit einer wasserdampfdurchlässigen Hülle (3, 4), dadurch gekennzeichnet, daß der Depotkörper (1) eine hydrophile Substanz enthält, deren Viskosität durch Aufnahme von Feuchtigkeit veränderbar ist.

7. Indikator nach Anspruch 6, dadurch gekennzeichnet, daß die hygroskopische Substanz ein Polyethylenglykol ist.

## Claims

1. Indicator, by means of which the storage time and temperature exposure of an article provided with the indicator can be determined over even a prolonged period and/or at higher temperatures, comprising a depot body (1) which contains fatty substances and/or synthetic substances comparable to fats with respect to viscosity and viscosity regulators added thereto, a flow medium (2) which is preferably provided in the form of stripes, and an envelope (3, 4) which surrounds the flow medium and is impermeable to the fatty substances or to the synthetic substances, the fatty substances or the synthetic substances penetrating into the flow medium (2) progressively in the course of time as a result of the connection of the flow medium (2) to the depot body (1), characterized in that gel formers have been added as viscosity regulators to the fatty substances or synthetic substances contained in the depot body (1).

2. Indicator according to Claim 1, characterized in that the gel formers are inorganic adsorbents.

3. Indicator according to one of the preceding claims, characterized in that the gel formers consist of aluminium hydroxide, highly disperse silica or bentonites.

4. Indicator according to one of the preceding claims, characterized in that the fatty substances or the synthetic substances have been applied together with the gel formers to an absorbent carrier as the flow medium (2).

5. Indicator according to one of the preceding claims, characterized in that the fatty substances consist of a mixture of fatty acid glycerol esters with paraffins.

6. Indicator according to one of the preceding claims, with a water vapour-permeable envelope (3, 4), characterized in that the depot body (1) contains a hydrophilic substance, the viscosity of which is variable as the result of absorption of moisture.

7. Indicator according to Claim 6, characterized in that the hygroscopic substance is a polyethylene glycol.


## Revendications

1. Indicateur, avec lequel on peut déterminer la charge temps/température d'un objet muni de l'indicateur, même sur un long intervalle de temps et/ou sous des températures élevées, qui présente un corps de dépôt (1) recevant des matières grasses et/ou des substances synthétiques comparables en ce qui concerne le comportement de viscosité, à des graisses et des régulateurs de viscosité qui leur sont ajoutés, un milieu d'écoulement (2) réalisé de préférence en forme de bande, ainsi qu'une enveloppe (3, 4) les entourant, imperméable aux matières grasses ou aux substances synthétiques, de telle sorte que par le raccordement du milieu d'écoulement (2) au corps de dépôt (1), les matières grasses ou les substances synthétiques pénètrent progressivement avec le temps dans le milieu d'écoulement (2), caractérisé en ce qu'aux matières grasses ou substances synthétiques contenues dans le corps de dépôt (1) sont ajoutés des formateurs de gel, en tant que régulateurs de viscosité.

2. Indicateur suivant la revendication 1, caractérisé en ce que les formateurs de gel sont des adsorbants inorganiques.

3. Indicateur suivant l'une des revendications précédentes, caractérisé en ce que les formateurs de gel sont constitués par de l'hydroxyde d'aluminium, du bioxyde de silicium fortement dispersé ou des bentonites.

4. Indicateur suivant l'une des revendications précédentes, caractérisé en ce que les matières grasses ou les substances synthétiques sont appliquées conjointement avec les formateurs de gel sur un support absorbant, en tant que milieu d'écoulement (2).

5. Indicateur suivant l'une des revendications précédentes, caractérisé en ce que les matières grasses sont constituées par un mélange d'esters de glycéride d'acides gras avec des paraffines.

6. Indicateur suivant l'une des revendications précédentes, avec une enveloppe perméable à la vapeur d'eau (3, 4), caractérisé en ce que le corps de dépôt (1) contient une substance hydrophile, dont la viscosité est modifiable par absorption d'humidité.

7. Indicateur suivant la revendication 6, caractérisé en ce que la substance hygroscopique est un polyéthylène glycol.

FIG.1

1

2

3

FIG.2

1

2

3

4

FIG.3

3

5

1

2

FIG.4

3

1

5

2

3

4

FIG.5

3

1

2

3

4

6

# FIG. 6

Indikatorverlauf [mm]

60°C

40°C

20°C

5°C

Lagerzeit [Jahre]

# FIG.7

Gehalt [%]

Indikatorverlauf [mm]

5°C

20°C

40°C

50°C

50°C

40°C

20°C

5°C

Lagerzeit [Mon]

FIG.8

FIG.9

FIG. 10

FIG.11

FIG.12

FIG. 13

FIG. 14

FIG. 15

FIG. 16